# EUROPEAN PATENT APPLICATION

(11) **EP 4 745 383 A2**
(43) Date of publication of application: **20.05.2026**
(21) Application number: 25217083.2
(22) Date of filing: 19.11.2025
(51) Int. Cl.: F02C 9/40

(54) **MONITORING AND SCHEDULING FUEL USE FOR MULTI-FUEL AIRCRAFT POWERPLANTS**

(30) Priority: 19.11.2024 US 202418953028
(71) Applicant: Pratt & Whitney Canada Corp., (01BE5) Longueuil, QC J4G 1A1 (CA)
(72) Inventor: WEINSTEIN, Jeffrey, (01BE5) Longueuil, J4G 1A1 (CA)
(74) Representative: Dehns

(57) **Abstract**

A method is provided which includes: processing first fuel data to determine a first trend of a powerplant performance characteristic for a first fuel, wherein the first fuel data is indicative of a plurality of first values of a tracked operational parameter for an aircraft powerplant model over a period of time, and the first values were recorded when combusting the first fuel; processing second fuel data to determine a second trend of the powerplant performance characteristic for a second fuel, wherein the second fuel data is indicative of a plurality of second values of the tracked operational parameter for the aircraft powerplant model over the period of time, and the second values were recorded when combusting the second fuel; and scheduling use of the first fuel and the second fuel based on the first trend of the powerplant performance characteristic and the second trend of the powerplant performance characteristic.

## Description

### TECHNICAL FIELD

This disclosure relates generally to an aircraft and, more particularly, to monitoring and scheduling fuel use for multi-fuel aircraft powerplants.

### BACKGROUND INFORMATION

An aircraft may include a powerplant capable of using multiple types of fuel. Various systems and methods are known in the art for delivering fuel to such a multi-fuel powerplant. While these known fuel delivery systems and methods have various benefits, there is still room in the art for improvement.

### SUMMARY

According to an aspect of the present disclosure, a method is provided which includes: processing first fuel data to determine a first trend of a powerplant performance characteristic for a first fuel, wherein the first fuel data is indicative of a plurality of first values of a tracked operational parameter for an aircraft powerplant model over a period of time, and the first values were recorded when combusting the first fuel; processing second fuel data to determine a second trend of the powerplant performance characteristic for a second fuel that is different than the first fuel, wherein the second fuel data is indicative of a plurality of second values of the tracked operational parameter for the aircraft powerplant model over the period of time, and the second values were recorded when combusting the second fuel; and scheduling use of the first fuel and the second fuel based on the first trend of the powerplant performance characteristic and the second trend of the powerplant performance characteristic.

According to another aspect of the present disclosure, another method is provided which includes: processing first fuel data to determine a first trend of powerplant deterioration for a first fuel, wherein the first fuel data is indicative of a plurality of first values of a tracked operational parameter for a fleet of aircraft with aircraft powerplants of a common aircraft powerplant model, and the first values were recorded when running the aircraft powerplants on the first fuel; processing second fuel data to determine a second trend of the powerplant deterioration for a second fuel different than the first fuel, wherein the second fuel data is indicative of a plurality of second values of the tracked operational parameter for the fleet of the aircraft with the aircraft powerplants of the common aircraft powerplant model, and the second values were recorded when running the aircraft powerplants on the second fuel; and scheduling use of the first fuel and the second fuel based on the first trend of the powerplant deterioration and the second trend of the powerplant deterioration to increase time on wing for an aircraft powerplant of the common aircraft powerplant model.

According to still another aspect of the present disclosure, another method is provided which includes: processing first fuel data to determine a first trend of powerplant deterioration for a first fuel, wherein the first fuel data is indicative of a plurality of first values of a tracked operational parameter for a fleet of aircraft with aircraft powerplants of a common aircraft powerplant model, and the first values were recorded when running the aircraft powerplants on the first fuel; processing second fuel data to determine a second trend of the powerplant deterioration for a second fuel different than the first fuel, wherein the second fuel data is indicative of a plurality of second values of the tracked operational parameter for the fleet of the aircraft with the aircraft powerplants of the common aircraft powerplant model, and the second values were recorded when running the aircraft powerplants on the second fuel; and predicting a future service point for an aircraft powerplant of the common aircraft powerplant model using at least one of the first trend of the powerplant deterioration or the second trend of the powerplant deterioration.

The following optional features may be applied to any of the above aspects.

The use of the first fuel and the second fuel may be scheduled for an aircraft powerplant of the aircraft powerplant model.

The use of the first fuel and the second fuel may be scheduled for a fleet of aircraft with the aircraft powerplant model.

The use of the first fuel and the second fuel may be scheduled using a first fuel digital twin and a second fuel digital twin. The first fuel digital twin may model operation of an aircraft powerplant of the aircraft powerplant model using the first fuel. The second fuel digital twin may model operation of the aircraft powerplant of the aircraft powerplant model using the second fuel.

Updated first fuel data may be processed with the first trend of the powerplant performance characteristic to determine a first anomaly in aircraft powerplant operation. In addition or alternatively, updated second fuel data may be processed with the second trend of the powerplant performance characteristic to determine a second anomaly in aircraft powerplant operation.

The method may also include: updating the first fuel digital twin to account for the first anomaly in aircraft powerplant operation; and/or updating the second fuel digital twin to account for the second anomaly in aircraft powerplant operation.

The method may also include predicting a future service point for an aircraft powerplant of the aircraft powerplant model using at least one of the first trend of the powerplant performance characteristic or the second trend of the powerplant performance characteristic.

The powerplant performance characteristic may be indicative of aircraft powerplant deterioration.

The powerplant performance characteristic may be indicative of aircraft powerplant fuel efficiency.

The powerplant performance characteristic may be indicative of aircraft powerplant operational performance.

The use of the first fuel and the second fuel may be scheduled to extend a service life of an aircraft powerplant of the aircraft powerplant model.

The use of the first fuel and the second fuel may be scheduled to increase a fuel efficiency of an aircraft powerplant of the aircraft powerplant model.

The use of the first fuel and the second fuel may be scheduled to increase an operational performance of an aircraft powerplant of the aircraft powerplant model.

The use of the first fuel and the second fuel may be scheduled to balance extending a service life of an aircraft powerplant of the aircraft powerplant model with at least a second parameter.

The first fuel data and the second fuel data may be processed using artificial intelligence to determine the first trend of the powerplant performance characteristic and the second trend of the powerplant performance characteristic.

The use of the first fuel and the second fuel may be scheduled using artificial intelligence.

The processing of the first fuel data, the processing of the second fuel data and the scheduling of use of the first fuel and the second fuel may be performed remote from an aircraft that includes an aircraft powerplant of the aircraft powerplant model for which the use of the first fuel and the second fuel is being scheduled.

The first fuel may be a non-hydrocarbon fuel. The second fuel may be a hydrocarbon fuel.

The first fuel may be a sustainable aviation fuel. The second fuel may be a non-sustainable available fuel.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft powerplant with an intermittent internal combustion engine.
FIG. 2 is a partial schematic illustration of the aircraft powerplant with a gas turbine engine.
FIG. 3 is a schematic illustration of a fuel system for the aircraft powerplant arranged with an engine system of the aircraft powerplant.
FIG. 4 is a schematic illustration of a fleet of aircraft in communication with a computer system.
FIG. 5 is a flow diagram of a method for monitoring and scheduling aircraft powerplant operation.

### DETAILED DESCRIPTION

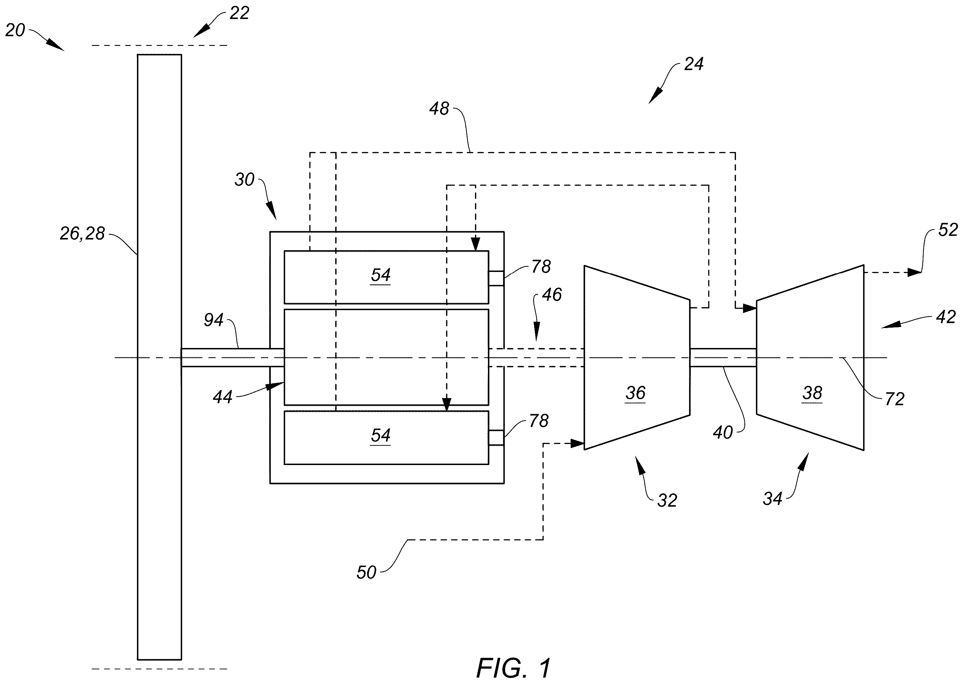

The present disclosure includes methods for modeling one or more performance characteristics of an aircraft powerplant, extending a service life of the aircraft powerplant, predicting future service(s) for the aircraft powerplant, and the like. An exemplary embodiment of such an aircraft powerplant 20 for an aircraft is illustrated in FIG. 1. The aircraft may be an airplane, a rotorcraft (e.g., a helicopter), a drone (e.g., an unmanned aerial vehicle (UAV)) or any other manned or unmanned aerial vehicle or system. This aircraft may be part of a fleet of aircraft with aircraft powerplants of a common aircraft powerplant model; e.g., aircraft powerplants with the same manufacturer powerplant model type and/or number. The aircraft powerplant 20 may be configured as, or otherwise included as part of, a propulsion system for the aircraft. The aircraft powerplant 20 may also or alternatively be configured as, or otherwise included as part of, an electrical power system for the aircraft.

The aircraft powerplant 20 of FIG. 1 includes a mechanical load 22 powered by an aircraft engine system 24; e.g., an aircraft engine. The mechanical load 22 may be configured as or otherwise include a rotor 26 mechanically driven by the engine system 24. This driven rotor 26 may be a bladed propulsor rotor 28 for the aircraft propulsion system. The propulsor rotor 28 may be an open propulsor rotor (e.g., an un-ducted propulsor rotor) or a ducted propulsor rotor. For example, where the engine system 24 is a propeller engine (e.g., a turbocharged propeller engine, a turbo-compound propeller engine or a turboprop engine), the open propulsor rotor may be a propeller rotor. Where the engine system 24 is a turboshaft engine, the open propulsor rotor may be a rotorcraft rotor such as a helicopter main rotor or a helicopter tail rotor. Where the engine system 24 is a turbofan engine, the ducted propulsor rotor may be a fan rotor. Alternatively, the driven rotor 26 may be configured as a generator rotor of an electric power generator for the aircraft electrical power system; e.g., an auxiliary power unit (APU) system. The present disclosure, however, is not limited to the foregoing exemplary mechanical loads nor to the foregoing exemplary engine systems. The engine system 24, for example, may alternatively be configured as a turbojet engine, a propfan engine, a pusher fan engine or any other type of turbine engine operable to power the operation of the mechanical load 22. However, for ease of description, the driven rotor 26 is described below as the propeller rotor.

The engine system 24 may be configured as a turbocharged or turbo-compound engine. The engine system 24 of FIG. 1, for example, includes an intermittent internal combustion (IC) engine 30, a compressor section 32 (e.g., an engine compressor) and a turbine section 34 (e.g., an engine turbine). The internal combustion engine 30 may be configured as a reciprocating piston engine or a rotary engine. Examples of the reciprocating piston engine include, but are not limited to, a radial engine, an inline (I) engine, a V-engine and a W-engine. A non-limiting example of the rotary engine is a Wankel engine. The compressor section 32 includes a bladed compressor rotor 36. The turbine section 34 includes a bladed turbine rotor 38. This turbine rotor 38 is coupled to and rotatable with the compressor rotor 36. The turbine rotor 38 of FIG. 1, for example, is connected to the compressor rotor 36 through a shaft 40. At least (or only) a combination of the compressor rotor 36, the turbine rotor 38 and the shaft 40 may collectively form a turbo-compressor rotating assembly 42; e.g., a spool. This turbo-compressor rotating assembly 42 may be rotationally discrete from an internal rotating assembly 44 of the internal combustion engine 30. Alternatively, the turbo-compressor rotating assembly 42 may be operatively coupled to and rotatable with the engine rotating assembly 44 through a drivetrain 46 (see dashed line). This drivetrain 46 may be a direct-drive drivetrain or a geared drivetrain.

The aircraft powerplant 20 and its engine system 24 include an internal powerplant flowpath 48. This powerplant flowpath 48 extends from an inlet 50 into the aircraft powerplant 20 and its engine system 24 to a combustion products exhaust 52 from the aircraft powerplant 20 and its engine system 24. More particularly, the powerplant flowpath 48 extends sequentially through the compressor section 32, through one or more combustion zones 54 (e.g., cylinder chambers, etc.) within the internal combustion engine 30, and through the turbine section 34 from the flowpath inlet 50 to the flowpath exhaust 52. With this arrangement, air delivered to the internal combustion engine 30 is compressed by the compressor rotor 36, and combustion products produced by combustion of a mixture of the compressed air and fuel within the combustion zone(s) 54 drives rotation of the engine rotating assembly 44 and the turbine rotor 38. The rotation of the engine rotating assembly 44 drives rotation of the propulsor rotor 28 - the driven rotor 26. The rotation of the turbine rotor 38 drives rotation of the compressor rotor 36 to facilitate the compression of the incoming air to the internal combustion engine 30. The rotation of the turbine rotor 38 may also assist driving rotation of the engine rotating assembly 44 where the turbo-compressor rotating assembly 42 is coupled to the engine rotating assembly 44 through the optional direct drive or geared drivetrain 46.

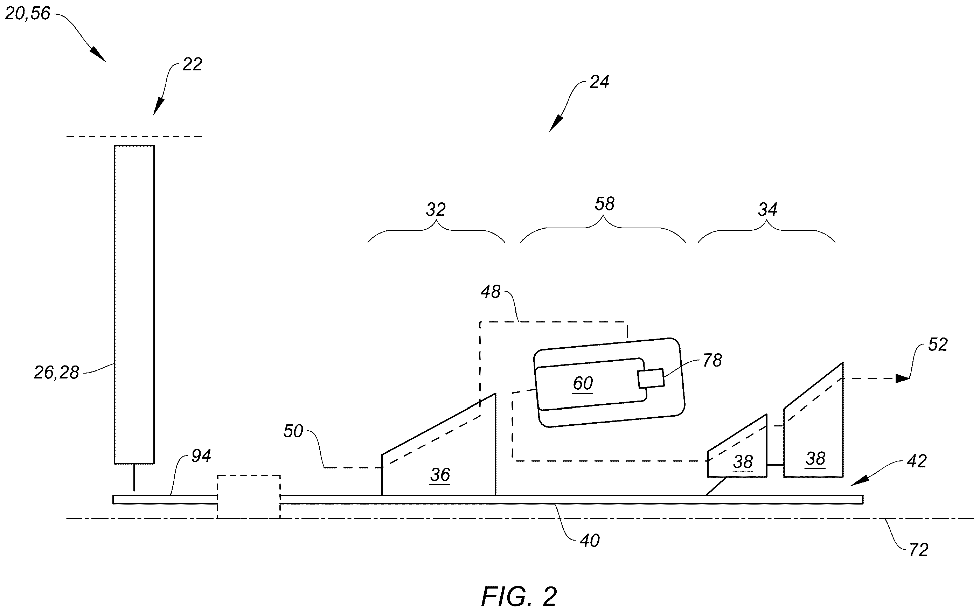

While the engine system 24 is described above as including the internal combustion engine 30 fluidly coupled between the compressor section 32 and the turbine section 34, the aircraft powerplant 20 of the present disclosure is not limited to such an exemplary arrangement as described above. For example, referring to FIG. 2, the engine system 24 may alternatively be configured as a gas turbine engine 56 where the internal combustion engine 30 of FIG. 1 is replaced by a combustor section 58 of FIG. 2. With such an arrangement, the powerplant flowpath 48 extends sequentially through the compressor section 32, through a combustion chamber 60 (e.g., an annular combustion chamber) within the combustor section 58, and through the turbine section 34 from the flowpath inlet 50 to the flowpath exhaust 52. For ease of illustration, the turbine engine 56 of FIG. 2 is shown as a single spool turbine engine. It is contemplated, however, the turbine engine 56 may alternatively include two or more spools; e.g., two or more internal rotating assemblies.

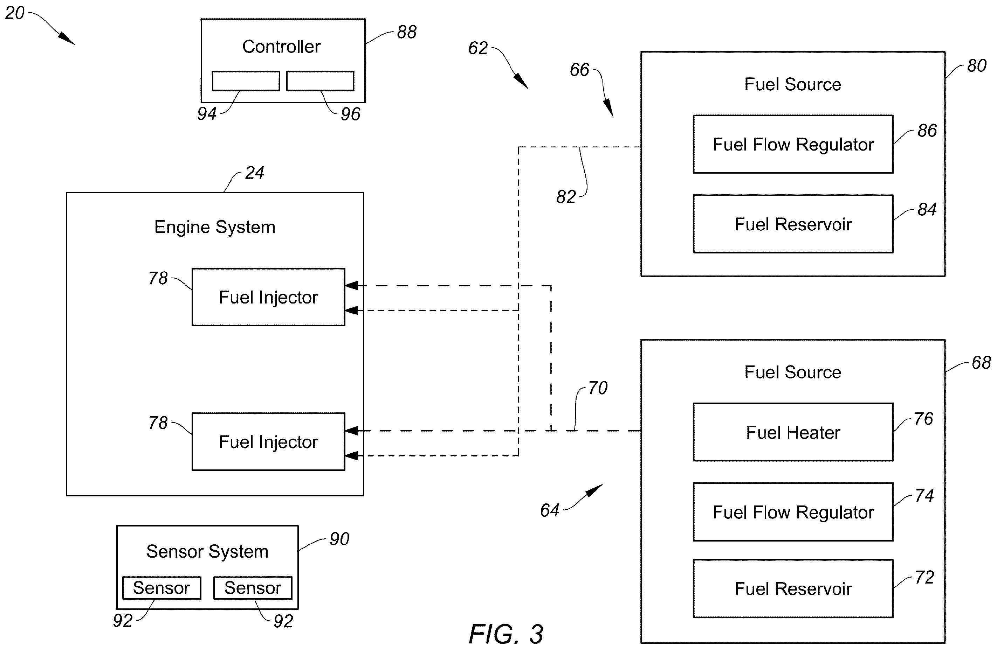

Referring to FIG. 3, the aircraft powerplant 20 includes a multi-fuel powerplant fuel system 62 for delivering the fuel to an internal volume or volumes of the aircraft powerplant 20 for mixing with the compressed air and subsequent combustion. Examples of the internal volume(s) include, but are not limited to, the combustion zone(s) 54 of FIG. 1 and the combustion chamber 60 of FIG. 2. The fuel delivered by the powerplant fuel system 62 of FIG. 3 to the internal volume(s) may be: (a) a first fuel during a first fuel mode of aircraft powerplant operation; (b) a second fuel during a second fuel mode of aircraft powerplant operation; and optionally (c) a combination of the first fuel and the second fuel during a multi-fuel mode of aircraft powerplant operation (e.g., when transitioning from the first fuel operating mode to the second fuel operating mode, or vice versa).

For ease of description, the first fuel is described below as a non-hydrocarbon fuel (NHF) and the second fuel is described below as a hydrocarbon fuel (HF). An example of the non-hydrocarbon fuel is hydrogen (H₂) fuel; e.g., liquid hydrogen or hydrogen gas. This hydrogen fuel may (or may not) be a non-hydrocarbon sustainable aviation fuel depending upon its production process. Examples of the hydrocarbon fuel include a kerosene fuel (e.g., a Jet A fuel), a propane fuel, a methane fuel (e.g., a natural gas fuel) and a hydrocarbon sustainable aviation fuel (SAF). Examples of the hydrocarbon sustainable aviation fuel include fuels produced using material(s) such as, but not limited to, corn grain, oil seeds, algae, fats, oils, greases, agricultural residue, forestry residue, wood mill waste, municipal solid waste streams, wet wastes (e.g., manure, wastewater treatment sludge, etc.) and dedicated energy crops. The present disclosure, however, is not limited to the foregoing exemplary non-hydrocarbon and hydrocarbon fuel types. For example, the first fuel may be a hydrocarbon or non-hydrocarbon sustainable aviation fuel, and the second fuel may be a traditional aviation fuel (e.g., a non-sustainable aviation fuel such as the kerosene fuel). In another example, the first fuel and the second fuel may be different types of hydrocarbon fuels (or non-hydrocarbon fuels) and/or hydrocarbon fuel(s) (or non-hydrocarbon fuel(s)) in different phases; e.g., gaseous fuel and liquid fuel.

The powerplant fuel system 62 of FIG. 3 includes a first fuel system 64 (e.g., a non-hydrocarbon fuel system) and a second fuel system 66 (e.g., a hydrocarbon fuel system). The first fuel system 64 includes a first fuel source 68 and a first fuel circuit 70. The first fuel source 68 of FIG. 3 includes a first fuel reservoir 72, a first fuel flow regulator 74 and a first fuel heater 76 (e.g., an evaporator). The first fuel reservoir 72 is configured to store a quantity of the first fuel (e.g., the non-hydrocarbon fuel such as the hydrogen fuel in its liquid phase) before, during and/or after aircraft powerplant operation. The first fuel reservoir 72, for example, may be configured as or otherwise include a tank, a cylinder, a pressure vessel, a bladder or any other type of (e.g., insulated) fuel storage container. The first fuel flow regulator 74 is configured to direct a flow of the second fuel (e.g., the non-hydrocarbon fuel in its liquid phase) from the first fuel reservoir 72, sequentially through the first fuel heater 76 and the first fuel circuit 70, to one or more fuel injectors 78. The first fuel flow regulator 74, for example, may be configured as or otherwise include a fuel compressor, a fuel pump and/or a fuel valve (or valve system). The first fuel heater 76 is configured to facilitate evaporation (or otherwise preheating) of the first fuel (e.g., non-hydrocarbon fuel) from its liquid phase to a gaseous phase such that the gaseous first fuel is directed through the first fuel circuit 70 to the fuel injectors 78. Of course, in other embodiments, the first fuel heater 76 may be omitted where the first fuel is stored within the first fuel reservoir 72 in its gaseous phase and/or where the first fuel system 64 is alternatively configured to deliver the first fuel in its liquid phase to the one or more fuel injectors 78.

The second fuel system 66 includes a second fuel source 80 and a second fuel circuit 82. The second fuel source 80 of FIG. 3 includes a second fuel reservoir 84 and a second fuel flow regulator 86. The second fuel reservoir 84 is configured to store a quantity of the second fuel (e.g., the hydrocarbon fuel) before, during and/or after aircraft powerplant operation. The second fuel reservoir 84, for example, may be configured as or otherwise include a tank, a cylinder, a pressure vessel, a bladder or any other type of fuel storage container. The second fuel flow regulator 86 is configured to direct a flow of the second fuel from the second fuel reservoir 84, through the second fuel circuit 82, to the one or more fuel injectors 78 of the aircraft powerplant 20. The second fuel flow regulator 86, for example, may be configured as or otherwise include a fuel compressor, a fuel pump and/or a fuel valve (or valve system).

For ease of description, the first fuel system 64 and the second fuel system 66 may be described herein as delivering both the first fuel and the second fuel (e.g., concurrently and/or at different times) to a common set of fuel injectors - the fuel injectors 78. The present disclosure, however, is not limited to such an exemplary arrangement. The aircraft powerplant 20, for example, may alternatively include a first set of one or more first fuel-fuel injectors and a second set of one or more second fuel-fuel injectors, where the first fuel-fuel injector(s) receive the first fuel from the first fuel system 64, and where the second fuel-fuel injector(s) receive the second fuel from the second fuel system 66.

The aircraft powerplant 20 of FIG. 3 also include a powerplant controller 88 and a sensor system 90. The powerplant controller 88 is in signal communication with (e.g., hardwired and/or wirelessly coupled to) the engine system 24 (see FIGS. 1 and 2), the powerplant fuel system 62 and the sensor system 90. The powerplant controller 88, for example, may be in signal communication with one or more actuators of the engine system 24, the first fuel flow regulator 74, the second fuel flow regulator 86, and one or more sensors 92 of the sensor system 90. The powerplant controller 88 is configured to receive data from the sensor system 90. The controller 88 is further configured to signal the propulsion system members (e.g., 24 and 62) to control operation of the aircraft powerplant 20 and, more generally, the engine system 24 and the powerplant fuel system 62. The powerplant controller 88, for example, may signal the first fuel flow regulator 74 and/or the second fuel flow regulator 86 such that the powerplant fuel system 62 selectively delivers the first fuel and/or the second fuel to the fuel injectors 78.

The powerplant controller 88 may be configured as an onboard powerplant controller (e.g., onboard engine controller) such as an electronic engine controller (EEC), an electronic control unit (ECU), a full-authority digital engine controller (FADEC), etc. Alternatively, the controller 88 may be discrete from, but in signal communication with for example, the onboard powerplant controller.

The powerplant controller 88 may be implemented with a combination of hardware and software. The hardware may include memory 94 and at least one processing device 96, which processing device 96 may include one or more single-core and/or multi-core processors. The hardware may also or alternatively include analog and/or digital circuitry other than that described above. The memory 94 is configured to store software (e.g., program instructions) for execution by the processing device 96, which software execution may control and/or facilitate performance of one or more operations such as those described herein. The memory 94 may be a non-transitory computer readable medium. For example, the memory 94 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

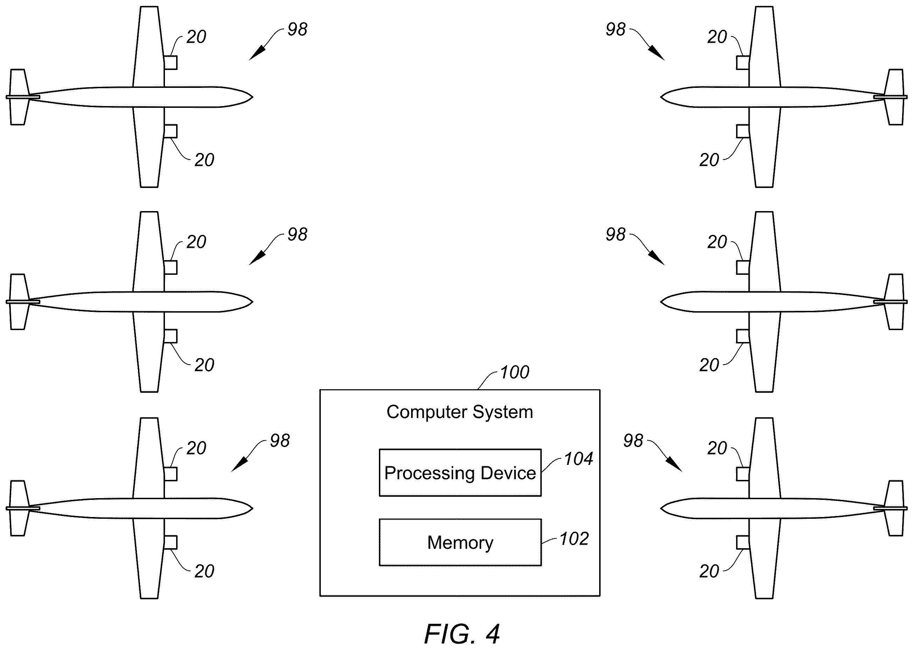

FIG. 4 illustrates a fleet of aircraft 98 with aircraft powerplants 20 of a common aircraft powerplant model; e.g., aircraft powerplants with the same manufacturer powerplant model type and/or identification number. Each aircraft 98 in the fleet of FIG. 4, for example, includes at least one aircraft powerplant 20 of the common aircraft powerplant model. A computer system 100 may be in signal communication with and/or may otherwise receive stored information from each aircraft powerplant 20 when, for example, the respective aircraft 98 is on ground. This computer system 100 may be located remote from the fleet of aircraft 98; e.g., at an aircraft powerplant manufacturer monitoring office, at an airliner monitoring office, and/or the like. However, in other embodiments, it is contemplated the computer system 100 may alternatively be designed for a single aircraft 98 and included onboard the aircraft 98.

The computer system 100 may be implemented with a combination of hardware and software. The hardware may include memory 102 and at least one processing device 104, which processing device 104 may include one or more single-core and/or multi-core processors. The hardware may also or alternatively include analog and/or digital circuitry other than that described above. The memory 102 is configured to store software (e.g., program instructions) for execution by the processing device 104, which software execution may control and/or facilitate performance of one or more operations such as those described herein. The memory 102 may be a non-transitory computer readable medium. For example, the memory 102 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

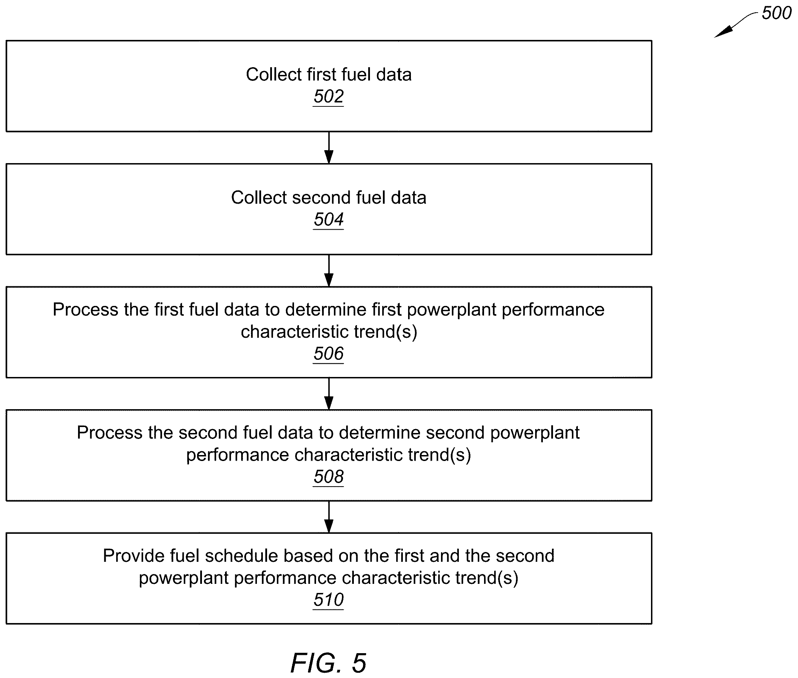

FIG. 5 is a flow diagram of a method 500 for monitoring and scheduling aircraft powerplant operation. For ease of description, the monitoring method 500 is described below with respect to the aircraft powerplant 20 and the fleet of aircraft 98 described above. The operating method 500 of the present disclosure, however, is not limited to performance with such an exemplary aircraft powerplant or fleet of aircraft. Moreover, for ease of description, the monitoring method 500 is described below with reference to the first fuel being the non-hydrocarbon fuel and the second fuel being the hydrocarbon fuel. The monitoring method 500 of the present disclosure, however, is not limited to operating with such exemplary types of first and second fuels. For example, the first fuel may alternatively be the hydrocarbon fuel, and the second fuel may alternatively be the non-hydrocarbon fuel. In another example, the first fuel may be a hydrocarbon or non-hydrocarbon sustainable aviation fuel whereas the second fuel may be a traditional aviation fuel, or vice versa. In still another example, the first fuel and the second fuel may be different types of hydrocarbon fuels (or non-hydrocarbon fuels) and/or hydrocarbon fuel(s) (or non-hydrocarbon fuel(s)) in different phases; e.g., gaseous fuel and liquid fuel.

In step 502, first fuel data is collected associated with at least (or only) a select aircraft powerplant model running on the first fuel; e.g., combusting the first fuel. This first fuel data is indicative of (e.g., includes, represents, etc.) a plurality of first values of one or more tracked operational parameters for the select aircraft powerplant model while running on the first fuel. The first values track changes in the operational parameter(s) over a period of time and over one or more aircraft flights. Moreover, the first values track changes in the operational parameter(s) across multiple aircraft 98 in the fleet and, more particularly, across multiple aircraft powerplants 20 of the select aircraft powerplant model. However, it is contemplated the monitoring method 500 may alternatively collect the first fuel data for a single aircraft 98 or a single aircraft powerplant 20.

Examples of the operational parameter(s) include: a powerplant temperature, a powerplant pressure, an ambient temperature, an ambient pressure, a throttle setting, a rotating structure speed, an aircraft altitude, an aircraft speed, an aircraft flight envelope, an aircraft flight phase and an aircraft powerplant in-service time (e.g., running time). Examples of the powerplant temperature include an inlet air temperature, a compressed air temperature and a combustion products temperature. Examples of the powerplant pressure include an inlet air pressure, a compressed air pressure and a combustion products pressure. Examples of the rotating structure speed include a rotor speed, a shaft speed and a spool speed. Examples of the aircraft flight phase include aircraft taxi, aircraft takeoff, aircraft climb, aircraft cruise, aircraft descent and aircraft landing. The present disclosure, however, is not limited to the foregoing exemplary tracked operational parameter(s).

To collect the first fuel data, the respective first values of the tracked operational parameter(s) may be communicated from each powerplant controller 88 or, more particularly, each aircraft 98 to the computer system 100. Each powerplant controller 88 or each aircraft 98, for example, may communicate data indicative of its respective first values (e.g., through a wireless and/or hardwire network) to the computer system 100. Alternatively, each powerplant controller 88 or each aircraft 98 may communicate the data indicative of its respective first values to an intermediate device, and the intermediate device may subsequently communicate the data indicative of its respective first values to the computer system 100. This intermediate device may be a server or a portable device which is used by personnel (e.g., maintenance personnel) to download the respective first values directly from a respective powerplant controller 88 or a respective aircraft 98. The computer system 100 may subsequently populate one or more lookup tables within its memory 102 with the received first value information for later retrieval and/or processing. The lookup tables may thereby include the first values of the tracked operational parameters for multiple aircraft powerplants 20 of the select aircraft powerplant model.

In step 504, second fuel data is collected associated with at least (or only) the select aircraft powerplant model running on the second fuel; e.g., combusting the second fuel. This second fuel data is indicative of (e.g., includes, represents, etc.) a plurality of second values of the tracked operational parameter(s) for the select aircraft powerplant model while running on the second fuel. The second values track changes in the operational parameter(s) over a period of time and over one or more aircraft flights. Moreover, the second values track changes in the operational parameter(s) across multiple aircraft 98 in the fleet and, more particularly, across multiple aircraft powerplants 20 of the select aircraft powerplant model. However, it is contemplated the monitoring method 500 may alternatively collect the second fuel data for a single aircraft 98 or a single aircraft powerplant 20.

To collect the second fuel data, the respective second values of the tracked operational parameter(s) may be communicated from each powerplant controller 88 or, more particularly, each aircraft 98 to the computer system 100. Each powerplant controller 88 or each aircraft 98, for example, may communicate data indicative of its respective second values (e.g., through the wireless and/or hardwire network) to the computer system 100. Alternatively, each powerplant controller 88 or each aircraft 98 may communicate the data indicative of its respective second values to the intermediate device, and the intermediate device may subsequently communicate the data indicative of its respective second values to the computer system 100. The computer system 100 may subsequently populate one or more lookup tables within its memory 102 with the received first value information for later retrieval and/or processing. The lookup tables may thereby include the second values of the tracked operational parameters for multiple aircraft powerplants 20 of the select aircraft powerplant model.

In some embodiments, the data indicative of the respective second values may be communicated concurrently with the data indicative of the respective first values from a respective aircraft powerplant 20 or a respective aircraft 98. In other embodiments, the data indicative of the respective second values may be communicated separately from the data indicative of the respective first values from a respective aircraft powerplant 20 or a respective aircraft 98, particularly where the aircraft 98 only uses a single one of the fuels (e.g., the first fuel or the second fuel) during a certain period of time or a certain flight.

In step 506, the first fuel data is processed to determine a first trend of one or more powerplant performance characteristics for the first fuel. Examples of the powerplant performance characteristic(s) include, but are not limited to, aircraft powerplant deterioration, aircraft powerplant fuel efficiency and aircraft powerplant operational performance. Examples of the aircraft powerplant operational performance include, but are not limited to, an aircraft powerplant thrust output, an aircraft powerplant shaft horsepower (shp) output, and a rotating structure acceleration. For example, the computer system 100 may process some or all of the first fuel data to determine a trend (e.g., a slope) in how an aircraft powerplant 20 of the select aircraft powerplant model deteriorates over time when running on the first fuel. In another example, the computer system 100 may process some or all of the first fuel data to determine a trend (e.g., an average) in fuel efficiency of an aircraft powerplant 20 of the select aircraft powerplant when running on the first fuel. In still another example, the computer system 100 may process some or all of the first fuel data to determine a trend (e.g., an average) in operational performance of an aircraft powerplant 20 of the select aircraft powerplant model when running on the first fuel.

One, some or all of the first trend(s) in the powerplant performance characteristic(s) may be determined in general; e.g., across various different operational parameters. One, some or all of the first trend(s) in the powerplant performance characteristic(s) may alternatively (or also) be determined as related to (e.g., as a function of) one or more of the tracked operational parameters. These operational parameters may include, but are not limited to, the ambient temperature, the ambient pressure, the throttle setting, the aircraft altitude, the aircraft speed, the aircraft flight envelope, the aircraft flight phase and/or the aircraft powerplant in-service time. In this manner, the first powerplant performance characteristic trend(s) may have a higher fidelity. The computer system 100 may determine the first powerplant performance characteristic trend(s) using artificial intelligence (AI) and/or other data processing techniques.

In step 508, the second fuel data is processed to determine a second trend of powerplant performance characteristic(s) for the second fuel. For example, the computer system 100 may process some or all of the second fuel data to determine a trend (e.g., a slope) in how an aircraft powerplant 20 of the select aircraft powerplant model deteriorates over time when running on the second fuel. In another example, the computer system 100 may process some or all of the second fuel data to determine a trend (e.g., an average) in fuel efficiency of an aircraft powerplant 20 of the select aircraft powerplant model when running on the second fuel. In still another example, the computer system 100 may process some or all of the second fuel data to determine a trend (e.g., an average) in operational performance of an aircraft powerplant 20 of the select aircraft powerplant model when running on the second fuel.

One, some or all of the second trend(s) in the powerplant performance characteristic(s) may be determined in general; e.g., across various different operational parameters. One, some or all of the second trend(s) in the powerplant performance characteristic(s) may alternatively (or also) be determined as related to (e.g., as a function of) one or more of the tracked operational parameters. These operational parameters may include, but are not limited to, the ambient temperature, the ambient pressure, the throttle setting, the aircraft altitude, the aircraft speed, the aircraft flight envelope, the aircraft flight phase and/or the aircraft powerplant in-service time. In this manner, the second powerplant performance characteristic trend(s) may have a higher fidelity. The computer system 100 may determine the second powerplant performance characteristic trend(s) using artificial intelligence (AI) and/or other data processing techniques.

In step 510, a fuel schedule is provided based on the first and/or the second trend(s) of the powerplant performance characteristic(s). This fuel schedule may be provided for a specific aircraft powerplant 20 of the select aircraft powerplant model. Alternatively, the fuel schedule may be provided, more generally, for all (or a subset) of the aircraft powerplants 20 of the select aircraft powerplant model. For example, the computer system 100 may review the first and/or the second trend(s) of the powerplant performance characteristic(s) using artificial intelligence and/or other data processing techniques to determine if there are any benefits to using the first fuel over the second fuel, and vice versa, during aircraft powerplant operation. For example, it is possible the powerplant performance characteristic trends may show one of the fuels provides a better fuel efficiency than the other one of the fuels. In another example, it is possible the powerplant performance characteristic trends may show one of the fuels provides a better operational performance than the other one of the fuels. In still another example, it is possible the powerplant performance characteristic trends may show one of the fuels is associated with faster aircraft powerplant deterioration than the other one of the fuels. Based on this review, the computer system 100 may develop the fuel schedule that extends an aircraft powerplant service life, increases an aircraft powerplant fuel efficiency, increases an aircraft powerplant operational performance, or balances two or more of the foregoing goals. For example, during aircraft cruise, the computer system 100 may schedule the use of the fuel associated with higher fuel efficiency. However, for aircraft takeoff and/or climb, the computer system 100 may schedule the use of the fuel associated with the higher operational performance. That said, if one of the fuels is particularly deleterious to an aircraft powerplant 20 during certain operational conditions, flight phases, etc., the computer system 100 may schedule the use of the other fuel in order to extend the aircraft powerplant service life (e.g., an on-wing life of the aircraft powerplant 20).

The fuel schedule may be provided using a first fuel digital twin and/or a second fuel digital twin. The first fuel digital twin may be developed based on or with input from the first powerplant performance characteristic trend(s). The second fuel digital twin may be developed based on or with input from the second powerplant performance characteristic trend(s). The first fuel digital twin digitally models operation of the select aircraft powerplant model while running of the first fuel. The second fuel digital twin digitally models operation of the select aircraft powerplant model while running of the second fuel. These digital twins may thereby use the powerplant performance characteristic trend(s) to predict how certain uses of the first fuel and/or the second fuel will influence aircraft powerplant performance over time and across multiple flight cycles. The computer system 100 may then use this information to determine the benefits to using the first fuel over the second fuel, and vice versa, during aircraft powerplant operation.

In some embodiments, the first fuel data and/or the second fuel data may be incrementally and/or continuously updated with new first fuel data and/or new second fuel data as the aircraft powerplant(s) 20 continue to run using the first and the second fuels. Moreover, the first fuel data and/or the second fuel data may be incrementally and/or continuously updated following use of the fuel schedule. In this manner, the computer system 100 may update its performance. For example, over time, the computer system 100 may observe one or more anomalies in the first fuel data and/or the second fuel data. The anomalies may be associated with unknown effects to using the first fuel or the second fuel, or a combination of the first fuel and the second fuel. Upon recognizing (e.g., detecting) these anomalies, the computer system 100 may use supervised and/or unsupervised learning to update the first fuel digital twin and/or the second fuel digital twin. The first fuel digital twin and/or the second fuel digital twin may thereby be updated to account for the anomalies. Such updates to the digital twins in turn may facilitate provision of improved fuel scheduling, etc.

In some embodiments, in addition to (or as an alternative to) determining the fuel schedule, the computer system 100 may process known information regarding a specific aircraft powerplant 20 with information obtained using the first fuel digital twin and/or the second fuel digital twin to predict a future service point (e.g., need, requirement, interval, etc.) for that specific aircraft powerplant 20. For example, if the aircraft powerplant 20 is at a certain point along its service schedule and/or its operation life and the aircraft powerplant 20 typically uses a certain ratio of the first fuel to the second fuel, the computer system 100 may use the first fuel digital twin and/or the second fuel digital twin and the powerplant performance characteristic trend(s) to predict when the future service point should be scheduled. Using this technique, aircraft downtime may be prescheduled to reduce or prevent airliner service interruptions, or the like.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method, comprising:
processing first fuel data to determine a first trend of a powerplant performance characteristic for a first fuel, wherein the first fuel data is indicative of a plurality of first values of a tracked operational parameter for an aircraft powerplant model over a period of time, and the plurality of first values were recorded when combusting the first fuel;
processing second fuel data to determine a second trend of the powerplant performance characteristic for a second fuel that is different than the first fuel, wherein the second fuel data is indicative of a plurality of second values of the tracked operational parameter for the aircraft powerplant model over the period of time, and the plurality of second values were recorded when combusting the second fuel; and
scheduling use of the first fuel and the second fuel based on the first trend of the powerplant performance characteristic and the second trend of the powerplant performance characteristic.

2. The method of claim 1, wherein:
the use of the first fuel and the second fuel is scheduled for an aircraft powerplant (20) of the aircraft powerplant model; or
the use of the first fuel and the second fuel is scheduled for a fleet of aircraft (98) with the aircraft powerplant model.

3. The method of claim 1 or 2, wherein:
the use of the first fuel and the second fuel is scheduled using a first fuel digital twin and a second fuel digital twin;
the first fuel digital twin models operation of an aircraft powerplant (20) of the aircraft powerplant model using the first fuel; and
the second fuel digital twin models operation of the aircraft powerplant (20) of the aircraft powerplant model using the second fuel.

4. The method of claim 3, wherein:
updated first fuel data is processed with the first trend of the powerplant performance characteristic to determine a first anomaly in aircraft powerplant operation; and/or
updated second fuel data is processed with the second trend of the powerplant performance characteristic to determine a second anomaly in aircraft powerplant operation.

5. The method of claim 4, further comprising:
updating the first fuel digital twin to account for the first anomaly in aircraft powerplant operation; and/or
updating the second fuel digital twin to account for the second anomaly in aircraft powerplant operation.

6. The method of claim 3, 4 or 5, further comprising predicting a future service point for an aircraft powerplant (20) of the aircraft powerplant model using at least one of the first trend of the powerplant performance characteristic or the second trend of the powerplant performance characteristic.

7. The method of any preceding claim, wherein the powerplant performance characteristic is indicative of aircraft powerplant deterioration.

8. The method of any of claims 1 to 6, wherein the powerplant performance characteristic is indicative of aircraft powerplant fuel efficiency.

9. The method of any of claims 1 to 6, wherein the powerplant performance characteristic is indicative of aircraft powerplant operational performance.

10. The method of any preceding claim, wherein:
the use of the first fuel and the second fuel is scheduled to extend a service life of an aircraft powerplant (20) of the aircraft powerplant model; or
the use of the first fuel and the second fuel is scheduled to increase a fuel efficiency of an aircraft powerplant (20) of the aircraft powerplant model; or
the use of the first fuel and the second fuel is scheduled to increase an operational performance of an aircraft powerplant (20) of the aircraft powerplant model.

11. The method of any preceding claim, wherein the use of the first fuel and the second fuel is scheduled to balance extending a service life of an aircraft powerplant (20) of the aircraft powerplant model with at least a second parameter.

12. The method of any preceding claim, wherein:
the first fuel data and the second fuel data are processed using artificial intelligence to determine the first trend of the powerplant performance characteristic and the second trend of the powerplant performance characteristic; and/or
the use of the first fuel and the second fuel is scheduled using artificial intelligence.

13. The method of any preceding claim, wherein:
the first fuel is a non-hydrocarbon fuel, and the second fuel is a hydrocarbon fuel; and/or
the first fuel is a sustainable aviation fuel, and the second fuel is a non-sustainable available fuel.

14. A method, comprising:
processing first fuel data to determine a first trend of powerplant deterioration for a first fuel, wherein the first fuel data is indicative of a plurality of first values of a tracked operational parameter for a fleet of aircraft (98) with aircraft powerplants (20) of a common aircraft powerplant model, and the plurality of first values were recorded when running the aircraft powerplants (20) on the first fuel;
processing second fuel data to determine a second trend of the powerplant deterioration for a second fuel different than the first fuel, wherein the second fuel data is indicative of a plurality of second values of the tracked operational parameter for the fleet of the aircraft (98) with the aircraft powerplants (20) of the common aircraft powerplant model, and the plurality of second values were recorded when running the aircraft powerplants (20) on the second fuel; and
scheduling use of the first fuel and the second fuel based on the first trend of the powerplant deterioration and the second trend of the powerplant deterioration to increase time on wing for an aircraft powerplant (20) of the common aircraft powerplant model.

15. A method, comprising:
processing first fuel data to determine a first trend of powerplant deterioration for a first fuel, wherein the first fuel data is indicative of a plurality of first values of a tracked operational parameter for a fleet of aircraft (98) with aircraft powerplants (20) of a common aircraft powerplant model, and the plurality of first values were recorded when running the aircraft powerplants (20) on the first fuel;
processing second fuel data to determine a second trend of the powerplant deterioration for a second fuel different than the first fuel, wherein the second fuel data is indicative of a plurality of second values of the tracked operational parameter for the fleet of the aircraft (98) with the aircraft powerplants (20) of the common aircraft powerplant model, and the plurality of second values were recorded when running the aircraft powerplants (20) on the second fuel; and
predicting a future service point for an aircraft powerplant (20) of the common aircraft powerplant model using at least one of the first trend of the powerplant deterioration or the second trend of the powerplant deterioration.
